# EUROPÄISCHE PATENTSCHRIFT

(11) **EP 1 064 488 B1**
(45) Veröffentlichungstag und Bekanntmachung des Hinweises auf die Patenterteilung: **10.04.2002**
(21) Anmeldenummer: 99917766.0
(22) Anmeldetag: 23.02.1999
(51) Int. Cl.: F16L 13/14

(54) **ROHRVERBINDUNG**
PIPE CONNECTION
RACCORD DE TUYAUX

(30) Priorität: 24.03.1998 DE 19813805
(43) Veröffentlichungstag der Anmeldung: 03.01.2001
(73) Patentinhaber: Mapress GmbH & Co. KG, 40764 Langenfeld (DE)
(72) Erfinder: FRANZEN, Rainer, D-47802 Krefeld (DE); FOERING, Herbert, D-42697 Solingen (DE)
(74) Vertreter: Meissner, Peter E., Dipl.-Ing.
(86) Internationale Anmeldenummer: DE9900567
(87) Internationale Veröffentlichungsnummer: WO9949255

(56) Entgegenhaltungen:
- EP-A- 0 870 964
- CH-A- 404 314
- DE-C- 19 631 574

## Beschreibung

Die Erfindung betrifft eine Rohrverbindung, bestehend aus einem Preßfitting und einem darin eingeschobenen und unlösbar damit verbundenen Leitungsrohr gemäß dem Oberbegriff des Patentanspruches 1.

Eine solche Rohrverbindung ist aus Dokument DE 196 31574 bekannt.

Eine Rohrverbindung mit einem die glatten Rohrenden umfassenden Fitting, dessen wulstförmig ausgebildete Enden je einen Dichtring aufnehmen, wobei mittels einer mit einer Betätigungsvorrichtung verbundenen auswechselbaren Haltevorrichtung mit gelenkig angeordneten Backen das wulstförmig ausgebildete Ende und gleichzeitig der benachbarte zylindrische Bereich des Fittings zusammen mit dem Rohr plastisch und der eingeschlossene Dichtring elastisch verformt werden, ist bekannt <siehe Auszug aus dem Prospekt "Mannesmann Pressfitting GmbH, Ausgabe 8/1994). Die Dichtfunktion der Verbindung wird dadurch erreicht, daß durch plastische Verformung des wulstartig ausgebildeten.Endes der Dichtring elastisch verformt wird und über einen bestimmten Teil des Querschnittsumfanges linienförmig an den ihn umgebenden Oberflächenbereichen des wulstartig ausgebildeten Endes des Fittings und des Rohres zur Anlage kommen. Zur Aufnahme der bei entsprechendem Innendruck auftretenden Längskräfte wird der dem wulstförmig ausgebildeten Ende benachbarte zylindrische Bereich des Fittings zusammen mit dem Rohr plastisch verformt. Bei der Verpressung werden sowohl das wulstförmig ausgebildete Ende als auch der benachbarte zylindrische Bereich mittels der Betätigungsvorrichtung gleichzeitig verformt. Auf Seite 13 und 14 des Prospektes wird darauf hingewiesen, daß für eine sichere Preßverbindung die richtige Einschieblänge für das Leitungsrohr von wesentlicher Bedeutung ist. Dabei wird unter "richtiger Einschieblänge" verstanden, daß vor dem Verpressen das Leitungsrohr unter leichtem
Drehen und gleichzeitigem Drücken in axialer Richtung bis zum durch die sickenartige Vertiefung des Preßfittings sich ergebenden Anschlag eingeschoben werden soll. Eine zuvor angebrachte Markierung auf dem Leitungsrohr dient dabei als Kontrolle. Auf einer Baustelle erfolgt eine Leitungsrohrverlegung aus Gründen einer praktischen Arbeitsfolge aber nicht immer Schritt für Schritt, d. h. Abmessen, Abschneiden, Entgraten, Anzeichnen, Einschieben und Verpressen, sondern es werden gleichzeitig mehrere zu verbindende Leitungsrohrabschnitte vermessen und eingeschoben und abschließend alle Verbindungsstellen verpreßt. Bei dieser Arbeitsweise ist aber nicht auszuschließen, daß die Vermessung insbesondere bei engwinkligen Raumverhältnissen, nicht exakt war und das möglicherweise zu kurz abgeschnittene Leitungsrohr in einen oder sogar zwei Preßfittings nicht mehr voll eingeschoben werden kann oder nach Ausrichten der Leitung an einer Stelle das bereits eingeschobene Leitungsrohr aus dem Preßfitting ein Stück wieder herausgezogen wird. Da diese Rückverschiebung von außen nicht immer erkennbar ist, wenn beispielsweise nicht ordnungsgemäß die erforderliche Einschieblänge angezeichnet ist oder die Anzeichnung unvollständig war (nicht sichtbare Rückseite), erfolgt trotzdem die Verpressung. Je nach Grad der Rückverschiebung kann eine-solche nicht ordnungsgemäße Verpreßstelle infolge der Bewegung der Leitung später möglicherweise zu Undichtigkeiten, ggf. auch zum Lösen der Verbindung führen.

Eine andere Rohrverbindung ist aus der JP 55-88939 bekannt. Sie besteht aus einem Preßfitting, der mindestens einen im Querschnitt wulstartig einen Dichtring aufnehmenden Abschnitt und einen daran anschließenden der Einschubseite zugewandten ersten zylindrisch ausgebildeten Abschnitt aufweist. Auf der anderen Seite des Ringwulstes ist ein zweiter zylindrisch ausgebildeter Abschnitt vorgesehen, der im Innendurchmesser kleiner ist, so daß er einen Anschlag bildet. Der Übergang vom Ringwulst zum zweiten zylindrisch ausgebildeten Abschnitt erfolgt über eine Sprungstelle, die abgerundet in die beiden daran angrenzenden Bereiche übergeht. Dabei dient die Sprungstelle als Führung für das eingeschobene Leitungsrohr. Der glattendige Endbereich des zu verbindenden Leitungsrohres kommt nach dem Einschieben am Anschlag des zweiten zylindrisch ausgebildeten Abschnittes zur Anlage. Mittels eines den Preßfitting umfassenden zwei oder mehr Preßbacken aufweisenden Preßwerkzeuges wird nach dem Schließen der Preßbacken eine unlösbare, dichte Rohrverbindung gebildet, wobei während des Verpressens die Preßbacken sowohl auf den Ringwulst einschließlich des darin eingelegten Dichtringes, als auch auf den ersten zylindrisch ausgebildeten Abschnitt des Preßfittings einwirken.

Die Problematik der richtigen Einschieblänge ist die gleiche wie schon zuvor ausführlich erläutert. Aus diesem Grunde ist diese Rohrverbindung ebenso nachteilig wie die zuerst erörterte.

Aufgabe der Erfindung ist es, eine aus einem Preßfitting und einem darin eingeschobenen Leitungsrohr bestehende Rohrverbindung anzugeben, die ohne Gefahr eines Dichtheitsverlustes nach dem Verpressen einen begrenzt festgelegten Längenausgleich ermöglicht.

Diese Aufgabe wird ausgehend vom Oberbegriff in Verbindung mit den kennzeichnenden Merkmalen des Patentanspruches 1 gelöst. Vorteilhafte Weiterbildungen sind Gegenstände von Unteransprüchen.

Erfindungsgemäß wird vorgeschlagen, im Bereich des der Einschubseite abgewandten zylindrisch ausgebildeten Abschnittes ein nur eine begrenzt festgelegte axiale Rückbewegung des eingeschobenen Leitungsrohres ermöglichendes Mittel anzuordnen, wobei die lichte Weite dieses Mittels im nichtbelasteten Zustand kleiner ist als der toleranzmäßig kleinste sich ergebende Außendurchmesser des eingeschobenen Leitungsrohres. Vorzugsweise ist dieses Mittel ein aus einem elastischen Material hergesteliter Ring. Beispielsweise kann dieser Ring ein im Querschnitt gesehen U-förmig gebogenes Ringblech sein, dessen Schenkel in Einschubrichtung des Leitungsrohres liegen. Um eine gewisse Krallwirkung zu erzielen, weist der auf dem Leitungsrohr aufliegende Schenkel einen dem Leitungsrohr zugewandten gekrümmten Endbereich auf. Alternativ kann der Ring mindestens eine nach innen sich erstreckende Nase aufweisen, die in Einschubrichtung des Leitungsrohres leicht geneigt ist. Das Mittel kann aus einem metallischen Werkstoff oder aus Kunststoff oder aus einem Verbundwerkstoff aus Metall-Kunststoff hergestellt sein.

Der Vorteil der vorgeschlagenen Rohrverbindung ist darin zu sehen, daß das Mittel eine Rückbewegung zwar zuläßt, aber diese Rückbewegung zunehmend erschwert wird, bis das Mittel am Dichtring oder an einem Anschlag zur Anlage kommt, so daß eine weitere Rückbewegung verhindert wird. In dieser Stellung ist die Herstellung einer dichten Rohrverbindung sichergestellt, da noch eine ausreichende Länge des rückbewegten Leitungsrohres vor dem Dichtring liegt. Die axiale Länge des Mittels wird so kurz wie möglich und in bezug auf die Länge des der Einschubseite abgewandten zweiten zylindrisch ausgebildeten Abschnittes oder die des Zwischenabschnittes so gewählt, daß eine ausreichende Ausgleichslänge von mehreren Millimetern verbleibt.

In der Zeichnung wird anhand mehrerer Ausführungsbeispiele die erfindungsgemäß ausgebildete Rohrverbindung näher erläutert. Es zeigen:
- Figur 1: einen hälftigen Längsschnitt einer erfindungsgemäß ausgebildeten Rohrverbindung
- Figur 2: wie Figur 1, jedoch mit Darstellung der Rückbewegungsmöglichkeit
- Figur 3: einen hälftigen Längsschnitt einer zweiten Ausführungsform einer erfindungsgemäß ausgebildeten Rohrverbindung
- Figur 4: wie Figur 3, jedoch mit Darstellung der Rückbewegungsmöglichkeit
- Figur 5: eine Variation der in Figur 3 dargestellten Ausführungsform
- Figur 6: wie Figur 5, jedoch mit Darstellung der Rückbewegungsmöglichkeit

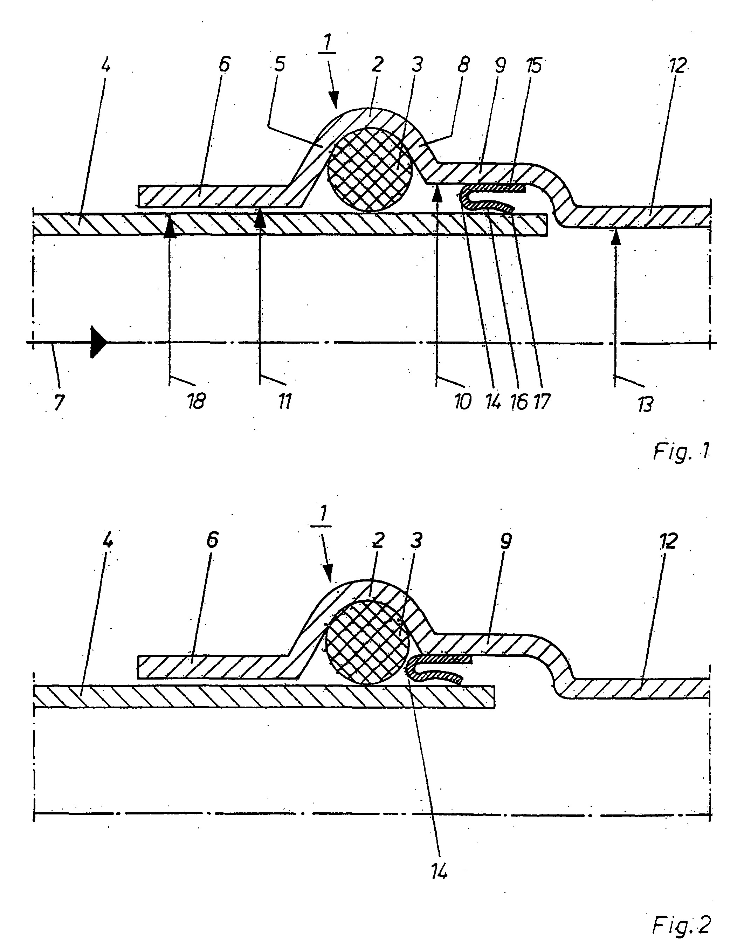

In Figur 1 ist in einem hälftigen Längsschnitt eine erfindungsgemäß ausgebildete Rohrverbindung dargestellt. Sie besteht aus einem Preßfitting 1 mit einem wulsfförmig ausgebildeten nach außen sich erstreckenden Abschnitt 2 und einem darin eingelegten Dichtring 3, sowie einem in den Preßfitting 1 eingeschobenen Leitungsrohr 4. In bekannter Weise geht der wulstförmig ausgebildete Abschnitt 2 über eine Flanke 5 in einen in Einschubrichtung liegenden ersten zylindrisch ausgebildeten Abschnitts über. Die Einschubrichtung ist mit einem Pfeil 7 gekennzeichnet. Auf der anderen Seite des wulstförmig ausgebildeten Abschnittes 2 geht die Flanke 8 erfindungsgemäß in einen zweiten zylindrisch ausgebildeten Abschnitt 9 über. Dieser Abschnitt 9 hat einen größeren Innendurchmesser 10 im Vergleich zum Innendurchmesser 11 des ersten zylindrisch ausgebildeten Abschnittes 6. Der zweite zylindrisch ausgebildete Abschnitt 9 geht einen Anschlag für das eingeschobene Leitungsrohr 4 bildend über in einen dritten zylindrisch ausgebildeten Abschnitt 12, dessen Innendurchmesser 13 geringer ist als der Innendurchmesser 11 des ersten zylindrisch ausgebildeten Abschnittes 6. Dadurch wird für das eingeschobene Leitungsrohr 4 ein Anschlag gebildet. Im Bereich des zweiten zylindrisch ausgebildeten Abschnittes 9 ist erfindungsgemäß ein die Rückbewegung des eingeschobenen Leitungsrohres 4 hemmendes Mittel angeordnet, in diesem Ausführungsbeispiel ein U-förmig gebogener Blechring 14, dessen Schenkel 15, 16 in Richtung der Einschubrichtung 7 liegen. Um eine gewisse Krallwirkung zu erreichen, ist der dem Leitungsrohr 4 zugewandte Schenkel 16 mit einem zum Leitungsrohr 4 gewandten gekrümmten Endbereich 17 versehen. Der Blechring 14 wird im Zuge der Herstellung des Preßfittings 1 zusammen mit dem Dichtring 3 eingelegt. In diesem unbelasteten Zustand ist die lichte Weite des Blechringes 14 kleiner als der toleranzmäßig kleinste Außendurchmesser 18 des eingeschobenen Leitungsrohres 4, so daß der Blechring 14 nach dem Einschieben des Leitungsrohres 4 elastisch zusammengedrückt wird.

Figur 2 zeigt die Rückbewegungsmöglichkeit des eingeschobenen Leitungsrohres 4, um beispielsweise einen gewissen Längenausgleich der vorverlegten Leitung überbrücken zu können. Infolge der Reibung wird die Rückbewegung zunehmend erschwert, bis der Blechring 14 am Dichtring 3 zur Anlage kommt. Erfolgt in dieser Stellung eine Verpressung, so ist die Dichtheit sichergestellt, da eine ausreichende Länge des Endbereiches des eingeschobenen Leitungsrohres 4 vor dem Dichtring 3 liegt.

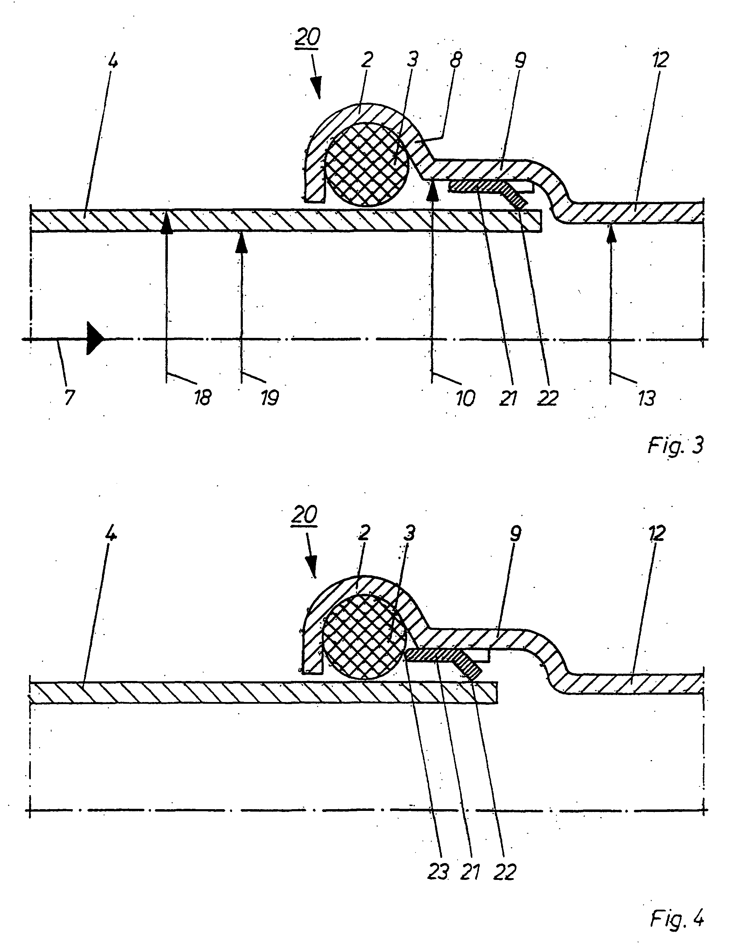

In Figur 3 ist in einem hälftigen Längsschnitt eine zweite Ausführungsform einer erfindungsgemäß ausgebildeten Rohrverbindung dargestellt, wobei für gleiche Elemente gleiche Bezugszeichen gewählt worden sind. Diese Rohrverbindung besteht aus einem Preßfitting 20 mit einem wulstförmig nach außen sich erstreckenden Abschnitt 2 und einem darin eingelegten Dichtring 3, sowie einem in den Preßfitting 20 eingeschobenen Leitungsrohr 4. In bekannter Weise geht der wulstförmig ausgebildete, Abschnitt 2 entlang einer Flanke 8 in einen entgegengesetzt der Einschubrichtung liegenden ersten zylindrisch ausgebildeten Abschnitt 9 über. Die Einschubrichtung ist mit einem Pfeil 7 gekennzeichnet. Am Ende der Erstreckung des ersten zylindrisch ausgebildeten Abschnittes 9 geht dieser einen Anschlag für das einzuschiebende Leitungsrohr 4 bildend über in einen zweiten zylindrisch ausgebildeten Abschnitt 12. Der Innendurchmesser 13 dieses zweiten zylindrisch ausgebildeten Abschnittes 12 liegt im Bereich des Innendurchmessers 19 des eingeschobenen Leitungsrohres 4 und ist geringer als der Innendurchmesser 10 des ersten zylindrisch ausgebildeten Abschnittes 9. Im Bereich des ersten zylindrisch ausgebildeten Abschnittes 9 ist erfindungsgemäß ein die Rückbewegung des eingeschobenen Leitungsrohres 4 hemmendes Mittel angeordnet. In diesem Ausführungsbeispiel ist es ein Ring 21 mit einer nach innen sich erstreckenden Nase 22. Die Nase 22 ist geneigt, und zwar in Einschubrichtung 7. Der Ring 21 wird im Zuge der Herstellung des Preßfittings 20 zusammen mit dem Dichtring 3 eingelegt. In diesem unbelasteten Zustand ist die lichte Weite des Ringes 21 kleiner als der toleranzmäßig kleinste Außendurchmesser 18 des eingeschobenen Leitungsrohres 4, so daß der Ring 21 nach dem Einschieben des Leitungsrohres 4 elastisch zusammengedrückt wird.

Figur 4 zeigt die Rückbewegungsmöglichkeit des eingeschobenen Leitungsrohres 4. Infolge der Reibung wird die Rückbewegung zunehmend erschwert, bis der Ring 21 am Dichtring 3 zur Anlage kommt. Erfolgt in dieser Stellung eine Varpressung, so ist die Dichtheit sichergestellt, da eine ausreichende Länge des eingeschobenen Leitungsrohres 4 vor dem Dichtring 3 liegt. Damit bei der Rückbewegung der Dichtring 3 durch den Ring 21 nicht beschädigt wird, weist der Ring 21 an diesem dem Dichtring 3 zugewandten Endbereich einen abgerundeten Abschnitt 23 auf.

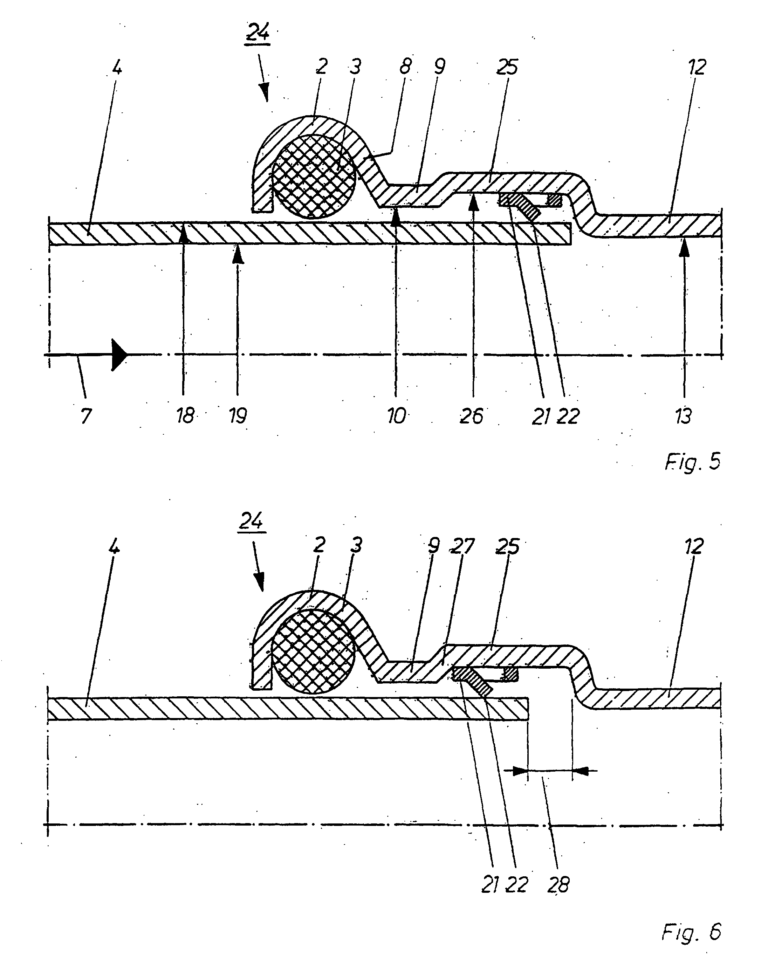

Figur 5 zeigt eine Variante der in Figur 3 dargestellten Ausführungsform. Im Unterschied dazu ist im ersten zylindrisch ausgebildeten Abschnitt 9 des Preßfittings 24 ein zylindrisch ausgebildeter Zwischenabschnitt 25 vorgesehen, dessen Innendurchmesser 26 größer ist als der des ersten zylindrisch ausgebildeten Abschnittes 9. Am Ende der Erstreckung geht der Zwischenabschnitt 25 einen Anschlag für das eingeschobene Leitungsrohr 4 bildend über in den zweiten zylindrisch ausgebildeten Abschnitt 12, dessen Innendurchmesser 13 im Bereich des Innendurchmessers 19 des eingeschobenen Leitungsrohres 4 liegt. Im Bereich des Zwischenabschnittes 25 ist erfindungsgemäß ein die Rückbewegung des eingeschobenen Leitungsrohres 4 hemmendes Mittel angeordnet. Dieses Mittel ist wie in Figur 3 dargestellt als Ring 21 ausgebildet mit einer in Einschubrichtung 7 liegenden Nase 22. Es könnte aber ebensogut auch der in Figur 1 dargestellte Blechring 14 als die Rückbewegung hemmende Mittel verwendet werden.

Figur 6 zeigt, daß im Unterschied zur Figur 4 die Rückbewegungsmöglichkeit des eingeschobenen Leitungsrohres 4 nicht durch den Dichtring 3, sondern durch den Absatz 27 des Zwischenabschnittes 25 begrenzt wird. Die sich dann ergebende maximal mögliche Ausgleichslänge Länge 28 ist mit Pfeilen kenntlich gemacht.

## Patentansprüche

1. Rohrverbindung, bestehend aus einem Pressfitting (1,20,24), der mindestens einen im Querschnitt wulstartig ausgebildeten, einen Dichtring (3) aufnehmenden Abschnitt (2) und einen daran anschließenden, der Einschubseite zugewandten und einen der Einschubseite abgewandten, zylindrisch ausgebildeten Abschnitt (6,9) oder nur einen der Einschubseite abgewandten zylindrischen Abschnitt (9) aufweist, wobei der der Einschubseite abgewandte zylindrisch ausgebildete Abschnitt (9) einen Anschlag bildend in einen daran anschließenden zylindrisch ausgebildeten Abschnitt (12) übergeht, dessen lnnendurchmesser(13) kleiner ist als die Innendurchmesser (10,11) der anderen zylindrisch ausgebildeten Abschnitte (6,9) und einem Leitungsrohr (4), dessen glattendiger Endbereich nach dem Einschub in den Pressfitting (1,20,24) am inneren Anschlag des Pressfittings (1,20,24) zur Anlage kommt und mittels eines den Pressfitting (1,20,24) umfassenden mindestens zwei Pressbacken aufweisenden Presswerkzeuges nach dem Schließen eine unlösbare, dichte Rohrverbindung gebildet wird, wobei während des. Verpressens die Pressbacken sowohl auf den Ringwulst (2) einschließlich des darin eingelegten Dichtringes (3), als auch auf den der Einschubseite zugewandten und / oder abgewandten zylindrisch ausgebildeten Abschnitt (6,9) des Pressfittings (1,20,24) einwirken,
**dadurch gekennzeichnet,**
**dass** im Bereich des der Einschubseite abgewandten zylindrisch ausgebildeten Abschnittes (9,25) ein nur eine begrenzt festgelegte axiale Rückbewegung des eingeschobenen Leitungsrohres (4) erlaubendes Mittel (14,21) angeordnet ist, dessen lichte Weite im nichtbelasteten Zustand kleiner ist als der toleranzmäßig kleinste sich ergebende Außendurchmesser (18) des eingeschobenen Leitungsrohres (4), wobei die axiale Länge des Mittels (14,21) so kurz wie möglich und in bezug auf die Länge des der Einschubseite abgewandten zylindrisch ausgebildeten Abschnittes (9) so gewählt wird, dass eine ausreichende Ausgleichslänge von mehreren Millimetern verbleibt.

2. Rohrverbindung nach Anspruch 1,
**dadurch gekennzeichnet,**
**daß** das Mittel ein aus einem elastischen Material bestehender Ring ist.

3. Rohrverbindung nach Anspruch 2,
**dadurch gekennzeichnet,**
**daß** der Ring als ein im Querschnitt gesehen U-förmig gebogenes Ringblech (14) ausgebildet ist, dessen Schenkel (15,16) in Einschubrichtung (7) des Leitungsrohres (4) liegen.

4. Rohrverbindung nach Anspruch 3,
**dadurch gekennzeichnet,**
**daß** der auf dem Leitungsrohr (4) liegende Schenkel (16) einen dem Leitungsrohr (4) zugewandten gekrümmten Endbereich (17) aufweist.

5. Rohrverbindung nach Anspruch 2,
**dadurch gekennzeichnet,**
**daß** der Ring (21) mindestens eine nach innen sich erstreckende Nase (22) aufweist.

6. Rohrverbindung nach Anspruch 5,
**dadurch gekennzeichnet,**
**daß** die Nase (22) bzw. die Nasen in Einschubrichtung (7) des Leitungsrohres (4) leicht geneigt ist / sind.

7. Rohrverbindung nach den Ansprüchen 1 und 2,
**dadurch gekennzeichnet,**
**daß** das Mittel (14,21) aus einem metallischen Werkstoff hergestellt ist.

8. Rohrverbindung nach den Ansprüchen 1 und 2,
**dadurch gekennzeichnet,**
**daß** das Mittel (14,21) aus Kunststoff hergestellt ist.

9. Rohrverbindung nach den Ansprüchen 1 und 2,
**dadurch gekennzeichnet,**
**daß** das Mittel (14,21) aus einem Verbundwerkstoff Metall-Kunststoff hergestellt ist.

10. Rohrverbindung nach einem der Ansprüche 1 - 9,
**dadurch gekennzeichnet,**
**daß** der Preßfitting (1) einen an den Ringwulst (2) anschließenden, der Einschubseite zugewandten ersten zylindrisch ausgebildeten Abschnitt (6) sowie einen der Einschubseite abgewandten zweiten zylindrisch ausgebildeten Abschnitt (9) aufweist, dessen Innendurchmesser (10) größer ist als der (11) des ersten zylindrisch ausgebildeten Abschnittes (6) und der im Endbereich einen Anschlag für das eingeschobene Leitungsrohr (4) bildend übergeht in den dritten zylindrisch ausgebildeten Abschnitt (12), dessen Innendurchmesser (13) im Bereich des Innendurchmessers (19) des eingeschobenen Leitungsrohres (4) liegt und immer kleiner ist als die beiden erstgenannten zylindrisch ausgebildeten Abschnitte (6,9).

11. Rohrverbindung nach einem der Ansprüche 1 - 9,
**dadurch gekennzeichnet,**
**daß** der Preßfitting (20,24) einen an den Ringwulst (2) anschließenden, der Einschubseite abgewandten ersten zylindrisch ausgebildeten Abschnitt (9) aufweist und der im Endbereich der Erstreckung einen Anschlag für das eingeschobene Leitungsrohr (4) bildend übergeht in den zweiten zylindrisch ausgebildeten Abschnitt (12), dessen Innendurchmesser (13) im Bereich des Innendurchmessers (19) des eingeschobenen Leitungsrohres (4) liegt und immer kleiner ist als der erstgenannte zylindrisch ausgebildeten Abschnitt (9).

12. Rohrverbindung nach Anspruch 11,
**dadurch gekennzeichnet,**
**daß** der der Einschubseite abgewandte erste zylindrisch ausgebildete Abschnitt (9) einen zylindrisch ausgebildeten Zwischenabschnitt (25) aufweist, dessen Innendurchmesser (26) größer ist als der des ersten Abschnittes (9) und der dann einen Anschlag bildend übergeht in den zweiten zylindrisch ausgebildeten Abschnitt (12).

13. Rohrverbindung nach Anspruch 12,
**dadurch gekennzeichnet,**
**dass** die axiale Länge des Mittels (14,21) so kurz wie möglich und in bezug auf den Zwischenabschnitt (25) so gewählt wird, dass eine ausreichende Ausgleichslänge von mehreren Millimetern verbleibt.

## Claims

1. Pipe coupling consisting of a press fitting (1, 20, 24) that comprises at least one section (2) formed with a bead-like cross-section to receive a sealing ring (3) and a cylindrically formed section (6, 9) connected thereto directed towards the insertion side and one directed away from the insertion side, or only one cylindrically formed section (9) directed away from the insertion side, such that the cylindrical section (9) directed away from the insertion side merges into a section forming an abutment connected to a further cylindrically formed section (12) whose inside diameter (13) is smaller than the inside diameters (10, 11) of the other cylindrical sections (6, 9), and a pipe (4) whose smooth end area, when inserted into the press fitting (1, 20, 24), comes up against the internal abutment of the press fitting (1, 20, 24) and which, when a pressing tool comprising at least two pressing jaws that fit around the press fitting (1, 20, 24) is closed, forms an permanent and leakproof pipe joint, such that during the pressing operation the pressing jaws act both on the annular bead (2) including the by then inserted sealing ring (3) and also on the cylindrical section (6, 9) of the press fitting (1, 20, 24) directed towards and/or directed away from the insertion side,
**characterised in that**
in the area of the cylindrical section (9, 25) directed away from the insertion side, an element (14, 21) is arranged which only allows limited backward axial movement of the inserted pipe (4), the clear width of the said element in the unstressed condition being smaller than the smallest possible outside diameter (18) of the pipe (4) having regard to the tolerance of the latter, the axial length of the said element (14, 21) being as small as possible and being chosen such that, in relation to the length of the cylindrical section (9) directed away from the insertion side, a sufficient compensating length amounting to several millimetres remains clear.

2. Pipe coupling according to Claim 1,
**characterised in that**
the said element is an annular element consisting of an elastic material.

3. Pipe coupling according to Claim 2,
**characterised in that**
the annular element is formed as an annular sheet bent into a U-shape as viewed in cross-section, whose limbs (15, 16) extend in the direction (7) along which the pipe (4) is inserted.

4. Pipe coupling according to Claim 3,
**characterised in that**
the limb (16) on the side near the pipe (4) has an end area (17) curved towards the pipe (4).

5. Pipe coupling according to Claim 2,
**characterised in that**
the annular element (21) has at least one lip (22) extending inwards.

6. Pipe coupling according to Claim 5,
**characterised in that**
the said lip(s) (22) is/are slightly inclined in the direction (7) along which the pipe (4) is inserted.

7. Pipe coupling according to Claims 1 and 2,
**characterised in that**
the element (14, 21) is made from a metallic material.

8. Pipe coupling according to Claim 5,
**characterised in that**
the element (14, 21) is made from plastic.

9. Pipe coupling according to Claims 1 and 2,
**characterised in that**
the element (14, 21) is made from a metal/plastic composite material.

10. Pipe coupling according to any of Claims 1 to 9,
**characterised in that**
the press fitting (1) comprises, connected to the annular bead (2), a first cylindrically formed section (6) directed towards the insertion side and a second cylindrically formed section (9) directed away from the insertion side, the inside diameter (10) of the latter being larger than that (11) of the first cylindrical section (6), and whose end area merges into a section forming an abutment for the inserted pipe (4) and then into a third cylindrically formed section (12), whose inside diameter (13) is in the same range as the inside diameter (19) of the inserted pipe (4) and is in any case smaller than the two first-mentioned cylindrically formed sections (6, 9).

11. Pipe coupling according to any of Claims 1 to 9,
**characterised in that**
the press fitting comprises a first cylindrically formed section (9) connected to the annular bead (2) and directed away from the insertion side, which, in the end area of its extension that forms an abutment for the inserted pipe (4), merges into a second cylindrical section (12) whose inside diameter (13) is in the same range as the inside diameter (19) of the inserted pipe (4) and is in any case smaller than the first-mentioned cylindrical section (9).

12. Pipe coupling according to Claim 11,
**characterised in that**
the first cylindrically formed section (9) directed away from the insertion side comprises a cylindrically formed intermediate section (25), whose inside diameter (26) is larger than that of the first section (9) and which then forms an abutment merging into the second cylindrical section (12).

13. Pipe coupling according to Claim 12,
**characterised in that**
the axial length of the element (14, 21) is as small as possible and is chosen such that, in relation to the intermediate section (25), a sufficient compensating length amounting to several millimetres remains clear.

## Revendications

1. Liaison pour tube, constituée d'un raccord de pressage (1, 20, 24), qui présente au moins un tronçon (2), recevant une bague d'étanchéité (3), réalisé sous forme de bourrelet en section transversale et un tronçon s'y raccordant, en regard du côté d'introduction et un tronçon éloigné du côté d'introduction, réalisé de façon cylindrique (6, 9) ou uniquement un tronçon (9) cylindrique éloigné du côté d'introduction, le tronçon (9) réalisé de façon cylindrique éloigné du côté d'introduction se convertissant en un tronçon (12) réalisé de façon cylindrique s'y raccordant en formant une butée, dont le diamètre interne (13) est plus petit que le diamètre interne (10, 11) des autres tronçons réalisés de façon cylindrique (6, 9), et un conduit (4), dont la zone d'extrémité lisse, après l'introduction dans le raccord de pressage (1, 20, 24), vient en appui contre la butée interne du raccord de pressage (1, 20, 24) et, au moyen d'un outil de pressage présentant au moins deux mâchoires de pressage et entourant le raccord de pressage (1, 20, 24), après la fermeture, il est formé une liaison pour tube inamovible, étanche, les mâchoires de pressage, pendant le pressage, agissant aussi bien sur le bourrelet annulaire (2) y compris la bague d'étanchéité (3) agencée dans celui-ci qu'également sur le tronçon (6, 9) réalisé de façon cylindrique, en regard et/ou éloigné du côté d'introduction, du raccord de pressage (1, 20, 24),
**caractérisée en ce que**, dans la zone du tronçon (9, 25) réalisé de façon cylindrique éloigné du côté d'introduction, il est agencé un moyen (14, 21) permettant uniquement un mouvement de retour axial déterminé limité du conduit introduit (4), dont la largeur intérieure, dans l'état non chargé, est plus petite que le diamètre externe résultant le plus petit au niveau des tolérances (18) du conduit introduit (4), la longueur axiale du moyen (14, 21) étant choisie aussi courte que possible et relativement à la longueur du tronçon (9) réalisé de façon cylindrique éloigné du côté d'introduction, de sorte qu'il demeure une longueur de compensation suffisante de plusieurs millimètres.

2. Liaison pour tube selon la revendication 1,
**caractérisée en ce que** le moyen est une bague constituée d'une matière élastique.

3. Liaison pour tube selon la revendication 2,
**caractérisée en ce que** la bague est réalisée sous forme d'une tôle annulaire (14) cintrée en forme de U en section transversale, dont les branches (15, 16) s'étendent dans la direction d'introduction (7) du conduit (4).

4. Liaison pour tube selon la revendication 3,
**caractérisée en ce que** la branche (16) se trouvant sur le conduit (4) présente une zone d'extrémité (17) cintrée en regard du conduit (4).

5. Liaison pour tube selon la revendication 2,
**caractérisée en ce que** la bague (21) présente au moins un ergot (22) s'étendant vers l'intérieur.

6. Liaison pour tube selon la revendication 5,
**caractérisée en ce que** l'ergot (22) ou les ergots sont légèrement inclinés dans la direction d'introduction (7) du conduit (4).

7. Liaison pour tube selon les revendications 1 et 2,
**caractérisée en ce que** le moyen (14, 21) est fabriqué en une matière métallique.

8. Liaison pour tube selon les revendications 1 et 2,
**caractérisée en ce que** le moyen (14, 21) est fabriqué en matière synthétique.

9. Liaison pour tube selon les revendications 1 et 2,
**caractérisée en ce que** le moyen (14, 21) est fabriqué en une matière composite métal-matière synthétique.

10. Liaison pour tube selon une des revendications 1 - 9,
**caractérisée en ce que** le raccord de pressage (1) présente un premier tronçon (6) réalisé de façon cylindrique, en regard du côté d'introduction, se raccordant au bourrelet annulaire (2), ainsi qu'un second tronçon (9) réalisé de façon cylindrique, éloigné du côté d'introduction, dont le diamètre interne (10) est plus grand que celui (11) du premier tronçon (6) réalisé de façon cylindrique et qui, dans la zone d'extrémité, en formant une butée pour le conduit introduit (4), se convertit en le troisième tronçon (12) réalisé de façon cylindrique, dont le diamètre interne (13) vaut sensiblement le diamètre interne (19) du conduit introduit (4) et est toujours plus petit que les deux tronçons (6, 9) réalisés de façon cylindrique, cités en premier.

11. Liaison pour tube selon une des revendications 1 - 9,
**caractérisée en ce que** le raccord de pressage (20, 24) présente un premier tronçon (9) réalisé de façon cylindrique, éloigné du côté d'introduction, se raccordant au bourrelet annulaire (2) et qui, dans la zone d'extrémité de l'extension, en formant une butée pour le conduit introduit (4), se convertit en le second tronçon (12) réalisé de façon cylindrique, dont le diamètre interne (13) vaut sensiblement le diamètre interne (19) du conduit introduit (4) et est toujours plus petit que le tronçon (9) réalisé de façon cylindrique, cité en premier.

12. Liaison pour tube selon la revendication 11,
**caractérisée en ce que** le premier tronçon (9) réalisé de façon cylindrique, éloigné du côté d'introduction présente un tronçon intermédiaire (25) réalisé de façon cylindrique dont le diamètre interne (26) est plus grand que celui du premier tronçon (9) et qui, alors, en formant une butée, se convertit en le second tronçon (12) réalisé de façon cylindrique.

13. Liaison pour tube selon la revendication 12,
**caractérisée en ce que** la longueur axiale du moyen (14, 21) est choisie aussi courte que possible et relativement au tronçon intermédiaire (25), de sorte qu'il demeure une longueur de compensation suffisante de plusieurs millimètres.
